(19) **Europäisches Patentamt / European Patent Office / Office européen des brevets**

(11) **EP 3 932 762 B1**

(12) **EUROPEAN PATENT SPECIFICATION**

(45) Date of publication and mention
of the grant of the patent:
**01.11.2023 Bulletin 2023/44**

(21) Application number: **20773954.1**

(22) Date of filing: **18.03.2020**

(51) International Patent Classification (IPC):
**B60W 10/20** (2006.01)      **B60W 40/105** (2012.01)
**B60W 40/107** (2012.01)      **B60W 30/04** (2006.01)
**B60W 30/18** (2012.01)

(52) Cooperative Patent Classification (CPC):
**B60W 60/0015; B60W 30/04; B60W 30/18145;**
B60W 30/16; B60W 2030/043; B60W 2050/0011;
B60W 2050/0033; B60W 2520/10; B60W 2530/201;
B60W 2540/18; B60W 2710/207; B60W 2720/10;
B60W 2720/106; B60W 2720/125

(86) International application number:
**PCT/CN2020/079961**

(87) International publication number:
**WO 2020/187259 (24.09.2020 Gazette 2020/39)**

(54) **SAFETY MONITORING METHOD AND SYSTEM FOR AUTONOMOUS VEHICLE, AND MOTION CONTROL SYSTEM**

VERFAHREN UND SYSTEM ZUR SICHERHEITSÜBERWACHUNG FÜR EIN AUTONOMES FAHRZEUG UND BEWEGUNGSSTEUERUNGSSYSTEM

PROCÉDÉ ET SYSTÈME DE SURVEILLANCE DE SÉCURITÉ POUR VÉHICULE AUTONOME ET SYSTÈME DE COMMANDE DE MOUVEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.03.2019 CN 201910204323**

(43) Date of publication of application:
**05.01.2022 Bulletin 2022/01**

(73) Proprietor: **Great Wall Motor Company Limited
Baoding, Hebei 071000 (CN)**

(72) Inventors:
• **HE, Lin**
  **Baoding, Hebei 071000 (CN)**
• **ZHANG, Kai**
  **Baoding, Hebei 071000 (CN)**
• **ZHEN, Longbao**
  **Baoding, Hebei 071000 (CN)**
• **GE, Jianyong**
  **Baoding, Hebei 071000 (CN)**
• **WANG, Tianpei**
  **Baoding, Hebei 071000 (CN)**
• **GAO, Jian**
  **Baoding, Hebei 071000 (CN)**
• **LU, Ning**
  **Baoding, Hebei 071000 (CN)**
• **WEI, Songbo**
  **Baoding, Hebei 071000 (CN)**
• **ZHANG, Jian**
  **Baoding, Hebei 071000 (CN)**

(74) Representative: **dompatent von Kreisler Selting Werner -
Partnerschaft von Patent- und Rechtsanwälten mbB
Deichmannhaus am Dom
Bahnhofsvorplatz 1
50667 Köln (DE)**

(56) References cited:
**DE-A1-102014 202 230      DE-A1-102016 011 282
US-A1- 2005 143 885**

## Description

### FIELD

The present invention relates to the technical field of intelligent transportation, and in particular to a safety monitoring method for an autonomous vehicle, and a safety monitoring system for an autonomous vehicle.

### BACKGROUND

An autonomous driving (also known as self-driving, intelligent drive) system is designed and developed generally based on four critical technical modules, i.e., environment perception, data merge, decision and planning, and motion control. In order to realize automatic travel, an autonomous vehicle has to first be "aware" (like a human) of its surroundings including vehicles, pedestrians, road signs, road surface, weather and any other environmental information that may affect driving, which is known as the environment perception. Then, the autonomous driving system processes all collected sensor information by extracting, screening, filtering, comparison, and the like, to obtain a stable signal that truly reflects environmental information around the vehicle, which is known as the data merge. Based on the merged information, the autonomous driving system manages to decide and plan on affairs including remaining traveling on the current road, changing lanes, travel track, travel speed, and the like, which is known as the decision and planning. Finally, the autonomous driving system controls the vehicle based on the received decision instruction to complete corresponding motions such as remaining traveling on the current road, changing lanes, traveling as subscribed speed, following the vehicle ahead, which is known as motion control.

A motion control module, as an underlying module of the autonomous driving system, has to follow "manipulation rules" for a vehicle to realize control on the vehicle, so as to guarantee safety, stability and comfort of the control. A "driver-vehicle" system including a driver characteristic is required to be considered when studying motion manipulation of a vehicle. In the "driver-vehicle" system, a manipulation action of the driver is done in an amount that the driver thinks appropriate based on a perceived vehicle status. For an autonomous vehicle, the autonomous driving system is equivalent to the driver, and therefore is required to release reasonable operation instruction to satisfy requirement for control.

DE 10 2016 011282 A1 relates to a method for performing an avoidance maneuver with a vehicle-trailer combination, comprising at least the following steps: - Detecting whether a collision between the vehicle combination and a collision object (200) is imminent; - Determining a swerving trajectory if a collision has been detected; - determining a target steering angle on the basis of the swerving trajectory and activating an active steering system as a function of the determined target steering angle in such a way that the vehicle combination moves along the swerving trajectory from an initial lane to a target lane in order to carry out the swerving maneuver; - determining a target vehicle deceleration and triggering an electronic braking system as a function of the target vehicle deceleration for braking the vehicle-trailer combination while performing the evasive maneuver. Further it is provided to determine a lateral acceleration of the vehicle combination during the execution of the evasive maneuver, wherein - the target steering angle is limited if the lateral acceleration reaches or exceeds a maximum lateral acceleration, and/or - the vehicle target deceleration is limited to a maximum vehicle target deceleration if a total acceleration of the vehicle combination reaches or exceeds a maximum total acceleration.

However, the modules in the autonomous driving system may fail during operation due to non-intelligence and non-integrity. For example, a sudden failure or abnormal signal of a certain sensor leads to abnormal input to the system and thereby causes erroneous calculations and finally obtains incorrect output. The incorrect output may cause the vehicle to suddenly turn or brake or accelerate, which may bring passengers an uncomfortable feeling, or even cause the vehicle to slip or roll over. Such situations seriously violate an original intention for developing the autonomous driving system. Therefore, in order to ensure a safety control of the autonomous driving system, it should be considered to add a "safety monitoring" function to the motion control module of the autonomous driving system so as to realize a safety monitoring of lateral and longitudinal control amount.

However, in development of a vehicle motion control algorithm or an actual road test, a conventional safety monitoring scheme is to directly apply a limit to an output control amount (for example, limiting that an output value $u$ satisfies $u_{min} \leq u \leq u_{max}$, where $u_{min}$ represents an upper limit of an output, and $u_{max}$ represents a lower limit of the output), in order to ensure the safety of testers and avoid damaging to an actuating mechanism of the vehicle. Such scheme, although achieving the purpose of monitoring to some extent, is too general and simple to adapt to different operating conditions and changing vehicle status. Therefore, the scheme may incur the result that the safety monitoring cannot be effectively achieved under certain operating conditions, or a control from the control system is restricted under other operating conditions. In other words, the conventional safety monitoring scheme cannot realize safety monitoring on the control amount depending on different operating conditions or different vehicle status.

## SUMMARY

In view of the above, an objective of the present invention is to provide a safety monitoring method for an autonomous vehicle in order to at least partially solve the above technical problems.

To achieve the objective, a technical solution of the present invention is realized in the following manners.

A safety monitoring method for an autonomous vehicle, includes a step of safety monitoring for lateral control, and a step of safety monitoring for longitudinal control.

The step of safety monitoring for lateral control includes: establishing a correspondence among a lateral acceleration of the vehicle, a longitudinal vehicle speed and a steering wheel angle; obtaining, according to the correspondence, a maximum steering wheel angle corresponding to a maximum value of the lateral acceleration given under one of different values of a vehicle speed, and determining the maximum steering wheel angle as a steering angle threshold; monitoring the steering wheel angle in real time, and determining whether the monitored value of the steering wheel angle is greater than the steering angle threshold; in a case where the monitored value of the steering wheel angle is greater than the steering angle threshold, limiting a value of the steering wheel angle to be equal to the steering angle threshold and then outputting the value of the steering wheel angle for the lateral control of the vehicle; and in a case where the monitored value of the steering wheel angle is less than or equal to the steering angle threshold, outputting the value of the steering wheel angle normally for the lateral control of the vehicle.

The step of safety monitoring for longitudinal control includes: obtaining, depending on one of different states of the longitudinal control, an acceleration threshold corresponding to a maximum value of a target acceleration given under one of different values of the vehicle speed; and monitoring an acquired value of the target acceleration in real time, and determining whether the value of the target acceleration is greater than the acceleration threshold; in a case where the value of the target acceleration is greater than the acceleration threshold, limiting the value of the target acceleration to be equal to the acceleration threshold and then outputting the value of the target acceleration for the longitudinal control of the vehicle; and in a case where the value of the target acceleration is less than or equal to the acceleration threshold, outputting the value of the target acceleration normally for the longitudinal control of the vehicle.

According to the present invention, the establishing a correspondence among a lateral acceleration of the vehicle, a longitudinal vehicle speed and a steering wheel angle includes: establishing, based on a vehicle kinematics model and vehicle parameters, the correspondence as

$$\delta_{sw} = \arctan\left(\frac{L a_y}{u^2}\right) \cdot i$$

where $\delta_{sw}$ represents the steering wheel angle, $L$ represents a wheelbase of the vehicle, $a_y$ represents the lateral acceleration, $u$ represents the longitudinal vehicle speed, and $i$ represents a steering system transmission ratio.

In a further embodiment, the obtaining, depending on one of different states of the longitudinal control, an acceleration threshold corresponding to one of maximum values of a target acceleration given under different values of the vehicle speed includes: determining the acceleration threshold by the following equation

$$a = \begin{cases} a_{11}, & VehSpd < TopSpd * b1 \\ a_{12}, & TopSpd * b1 < VehSpd \le b2 * TopSpd \\ a_{13}, & TopSpd * b2 < VehSpd \le b3 * TopSpd \\ a_{14}, & TopSpd * b3 < VehSpd \le b4 * TopSpd \\ a_{15}, & TopSpd * b4 < VehSpd \le b5 * TopSpd \\ a_{16}, & TopSpd * b5 < VehSpd \le b6 * TopSpd \\ a_{17}, & TopSpd * b6 < VehSpd \end{cases}$$

where *TopSpd* represents a target vehicle speed, *VehSpd* represents a current vehicle speed, *b1* to *b6* are constants in an increasing sequence and less than 1, and $a_{11}$ to $a_{17}$ are set values in a decreasing sequence.

In a further embodiment, in the step of safety monitoring for lateral control, before the establishing a correspondence among a lateral acceleration of the vehicle, a longitudinal vehicle speed and a steering wheel angle, the method further includes: establishing a rollover stability evaluation index for the vehicle, where the rollover stability evaluation index comprises a lateral-load transfer rate of the vehicle; and determining a factor that affects the rollover stability evaluation index as a target of stability control for the vehicle. The determining a factor that affects the rollover stability evaluation index as a target of stability control for the vehicle includes: determining a factor that affects the lateral-load transfer rate, where the factor comprises the lateral acceleration of the vehicle; and taking the lateral acceleration as the target of stability control for the vehicle corresponding to the lateral-load transfer rate.

Compared with the conventional technology, a safety monitoring strategy for an autonomous driving system is designed by the present invention in view of safety of a lateral control and longitudinal control of the autonomous driving system, so that the design of the autonomous driving system is more complete.

Another objective of the present invention is to provide a machine-readable storage medium and a processor in order to at least partially solve the technical problems.

To achieve the objective, a technical solution of the present invention is realized in the following manners.

A machine-readable storage medium has instructions stored thereon which, when executed by a computer, cause the computer to perform the safety monitoring method for an autonomous vehicle.

The machine-readable storage medium has the same advantageous as the safety monitoring method compared with the conventional technology, which is not repeated herein.

Another objective of the present invention is to provide a safety monitoring system for an autonomous vehicle in order to at least partially solve the technical problems.

To achieve the objective, a technical solution of the present invention is realized in the following manners.

A safety monitoring system for an autonomous vehicle, includes a lateral control safety monitoring unit and a longitudinal control safety monitoring unit.

The lateral control safety monitoring unit includes a relationship establishing module, a first threshold determining module, and a first monitoring module. The relationship establishing module is configured to establish a correspondence among a lateral acceleration of the vehicle, a longitudinal vehicle speed and a steering wheel angle. The first threshold determining module is configured to obtain, based on the correspondence, a maximum steering wheel angle corresponding to a maximum value of the lateral acceleration given under one of different values of a vehicle speed, and determine the maximum steering wheel angle as a steering angle threshold. The first monitoring module is configured to: monitor the value of the steering wheel angle in real time; determine whether the monitored value of the steering wheel angle is greater than the steering angle threshold; in a case where the monitored value of the steering wheel angle is greater than the steering angle threshold, limit the value of the steering wheel angle to be equal to the steering angle threshold and then output the value of the steering wheel angle for a lateral control of the vehicle; and in a case where the monitored value of the steering wheel angle is less than or equal to the steering angle threshold, output the value of the steering wheel angle normally for the lateral control of the vehicle.

The longitudinal control safety monitoring unit includes a second threshold determining module and a second monitoring module. The second threshold determining module is configured to obtain, depending on one of different states of the longitudinal control, an acceleration threshold corresponding to a maximum value of a target acceleration given under one of different values of the vehicle speed. The second monitoring module is configured to: monitor an acquired value of the target acceleration in real time, and determine whether the value of the target acceleration is greater than the acceleration threshold; in a case where the value of the target acceleration is greater than the acceleration threshold, limit the value of the target acceleration to be equal to the acceleration threshold and then output the value of the target acceleration for a longitudinal control of the vehicle; and in a case where the value of the target acceleration is less than or equal to the acceleration threshold, output the value of the target acceleration normally for the longitudinal control of the vehicle.

According to the present invention, the relationship establishing module establishes the correspondence among a lateral acceleration of the vehicle, a longitudinal vehicle speed and a steering wheel angle in the following manner: establishing, based on a vehicle kinematics model and vehicle parameters, the correspondence as

$$\delta_{sw} = \arctan\left(\frac{L a_y}{u^2}\right) \cdot i$$

where $\delta_{sw}$ represents the steering wheel angle, $L$ represents a wheelbase of the vehicle, $a_y$ represents the lateral acceleration, $u$ represents the longitudinal vehicle speed, and $i$ represents a steering system transmission ratio.

determining the correspondence among a lateral acceleration of the vehicle, a longitudinal vehicle speed and a steering wheel angle based on a transformation relationship between the front wheel angel and the steering wheel angle expressed as

$$\delta_{sw} = \delta i$$

where $\delta_{sw}$ represents the steering wheel angle, and $i$ represents a steering system transmission ratio.

In a further embodiment, the second threshold determining module obtains, depending on one of different states of the longitudinal control, an acceleration threshold corresponding to a maximum value of a target acceleration given under one of different values of the vehicle speed in the following manner: determining the acceleration threshold by the following equation

$$a = \begin{cases} a_{11}, & VehSpd < TopSpd * b1 \\ a_{12}, & TopSpd * b1 < VehSpd \leq b2 * TopSpd \\ a_{13}, & TopSpd * b2 < VehSpd \leq b3 * TopSpd \\ a_{14}, & TopSpd * b3 < VehSpd \leq b4 * TopSpd \\ a_{15}, & TopSpd * b4 < VehSpd \leq b5 * TopSpd \\ a_{16}, & TopSpd * b5 < VehSpd \leq b6 * TopSpd \\ a_{17}, & TopSpd * b6 < VehSpd \end{cases}$$

where *TopSpd* represents a target vehicle speed, *VehSpd* represents a current vehicle speed, b 1 to b6 are constants in an increasing sequence and less than 1, and $a_{11}$ to $a_{17}$ are set values in a decreasing sequence.

The safety monitoring system has the same advantageous as the safety monitoring method compared with the conventional technology, which is not repeated herein.

Other features and advantageous of the present invention are illustrated in detail through description of the specific embodiments.

**BRIEF DESCRIPTION OF THE DRAWINGS**

The drawings constituting a part of the present invention are intended to provide a further understanding of the present invention, and exemplary embodiments and descriptions of the present invention are intended to explain the present invention, which do not constitute an undue limitation to the present invention. In the drawings:

Figure 1 is a schematic flow chart of a safety monitoring method for an autonomous vehicle according to an embodiment of the present invention;

Figure 2 is a schematic diagram showing a physical model of a lateral load transfer rate according to an embodiment of the present invention;

Figure 3 is a schematic flow chart showing a process of safety monitoring for lateral control according to an embodiment of the present invention;

Figure 4 is a graph showing maximum values of a steering wheel angle under different values of a vehicle speed in a practical measurement instance according to an embodiment of the present invention;

Figure 5 is a schematic flow chart of a process of safety monitoring for longitudinal control according to an embodiment of the present invention;

Figure 6 is a schematic structural diagram of a safety monitoring system for an autonomous vehicle according to an embodiment of the present invention; and

Figure 7 is a schematic structural diagram of a motion control system for an autonomous vehicle according to an embodiment of the present invention.

Reference numerals are listed as follows:

610 Lateral control safety monitoring unit
620 Longitudinal control safety monitoring unit
611 Relationship establishing module
612 First threshold determining module
613 First monitoring unit
621 Second threshold determining module
622 Second monitoring unit

**DETAILED DESCRIPTION**

Hereinafter, the present invention is described in detail with reference to the drawings and in conjunction with the embodiments.

Before describing the embodiments of the present invention, three longitudinal control states involved in a longitudinal control of an autonomous vehicle are introduced as follows, i.e., a cruise mode, a follow-up mode, and an AEB mode. A start-stop mode may be additionally included in other embodiments. The start-stop mode indicates that the autonomous vehicle can accurately control the vehicle to park to a preset location (such as a toll station, service area, and the like). The start-stop mode may function under the follow-up mode, and thus may be regarded subordinating to the follow-up mode.

1) Cruise mode

The cruise mode indicates that when the autonomous vehicle (also referred to as a "vehicle" hereinafter) is in a cruise state where there is no vehicle ahead within an acting distance (*ActDis_m*), a maximum speed at which the autonomous vehicle can travel is adjusted so that the vehicle accelerates when a speed is lower than the maximum speed, and the vehicle decelerates when the speed is greater than or equal to the maximum speed.

2) Follow-up mode

The follow-up mode indicates that when the autonomous vehicle is in a follow-up state where there is a vehicle ahead within the acting distance on a current lane and the vehicle follows the vehicle ahead without changing lanes, the speed of the vehicle is adjusted so that the vehicle travels with a determined safety distance and a relative speed with respect to the vehicle ahead whiling ensuring a safe driving, thereby the vehicle is maintained following the vehicle ahead.

3) AEB mode

The AEB mode indicates that the autonomous vehicle brakes with extreme deceleration once the AEB mode is signaled based on a longitudinal decision.

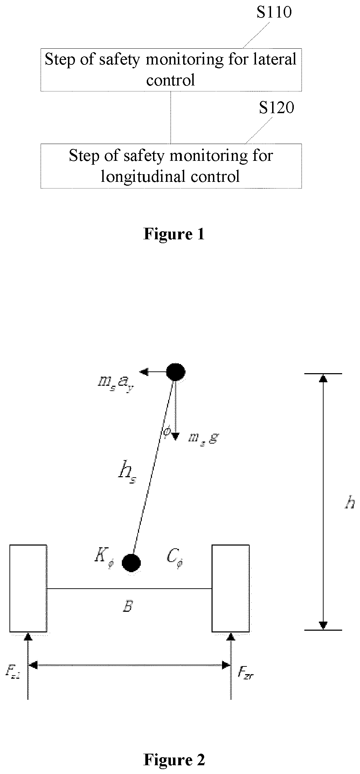

Figure 1 is schematic flow chart of a safety monitoring method for an autonomous vehicle according to an embodiment of the present invention. As shown in Figure 1, the safety monitoring method for a longitudinal control may include steps S 110 and S 120 as follows.

In step S 110, a step of safety monitoring for lateral control is performed.

In lateral control of the vehicle, rollover is a control indicator that needs to be focused on. Development on rollover stability starts in recent 20 years, but casualties and economic losses caused by rollover are serious. Therefore, the lateral control involved in the embodiment of the present invention mainly includes rollover control. It is necessary to first establish a rollover stability evaluation index for the vehicle, and then perform safety monitoring on the rollover stability evaluation index.

To study vehicle rollover, an evaluation index to measure a risk level of the vehicle rollover is required. This index is further required to be useful in determining whether the vehicle has reached a critical rollover point. First, rollover refers to a dangerous situation in which a vehicle turns over a right angle or more around its traveling direction during movement, causing a collision between a vehicle body and the ground. In an actual operating condition, especially for a vehicle rollover caused by curve movement, due to the large inertia of a high-speed vehicle, a rollover accident happens in most cases when a wheel on one side leaves the ground. Only a very small number of drivers driving special vehicles can keep driving and return to a stable state when a wheel is off the ground. Therefore, the rollover stability evaluation index varies depending on different situations.

Since a rollover accident happens when a vertical load of a wheel on one side is basically zero during a high-speed movement, the study of vehicle rollover requires real-time measurement of the vertical load of each wheel of the vehicle during the high-speed movement. However, it is difficult to measure the load on a wheel when the vehicle is moving, and therefore it is necessary to perform parameter transformation. The transformation is to transform a mechanical condition of the vehicle when a wheel on one side is off the ground. The evaluation index that is finally used also varies depending on different condition transformations.

Based on this, the rollover stability evaluation index in the embodiment of the present invention includes one or more of a roll angle threshold, a lateral acceleration threshold, a rollover time, and a lateral-load transfer rate (LTR). The roll angle threshold and the lateral acceleration threshold may be used to describe a rollover state of the vehicle, and may be obtained through a static experiment. Specifically, a roll angle and a lateral acceleration at different stages when the vehicle is moving may be obtained by measurement or calculation, and are compared with thresholds respectively. The roll angle or the lateral acceleration that is more approximately equal to or exceeds the threshold indicates that a rollover is more likely to happen. A serious problem with these two evaluation indices is the need to carry out static experiments on different vehicle models to obtain the threshold of a corresponding parameter of the vehicle.

The lateral load transfer rate is a commonly used index for indicating changes in the vertical load of a wheel. In the embodiment of the present invention, the lateral load transfer rate may also be used to evaluate the rollover stability of the vehicle. The lateral load transfer rate refers to a ratio of a difference between vertical loads on left and right wheels to a sum of the vertical loads on the left and right wheels. An expression of the lateral load transfer rate is

$$LTR = \frac{F_{zl} - F_{zr}}{F_{zl} + F_{zr}} \quad (1)$$

where *LTR* represents the lateral load transfer rate, and $F_{zl}$ and $F_{zr}$ represent the vertical loads applied on the left wheel and the right wheel, respectively. $F_{zl}$ and $F_{zr}$ satisfy an equation

$$F_{zl} + F_{zr} = mg \quad (2)$$

where *m* represents a total mass of the vehicle, and *g* represents a gravitational acceleration. Considering a travelling condition of the vehicle, when the vehicle is turning, the vertical load of an inner wheel decreases and the vertical load of an outer wheel increases correspondingly. According to the definition of rollover, obviously there is:

$$\begin{cases} 0 \leq |LTR| < 1, vehicle\ remains\ stable \\ \quad 1 \leq |LTR|, \ vehicle\ rolls\ over \end{cases} \quad (3)$$

A value of the lateral load transfer rate is not related to a vehicle model, or a vehicle body parameter, or the like, and an absolute value of the lateral load transfer rate is always about 1, which is easy to perform comparison. Therefore, it is suitable for all types of vehicles (including autonomous vehicles), and has a certain degree of universality for research on vehicles that are prone to rollover, such as SUVs or semi-trailers.

In practice, an anti-rollover model of the vehicle may be established based on equations (1) to (3) using Simulink simulation software, so that some vehicle operating parameters that are hard to acquire, such as the roll angle and the LTR, can be measured through a simulation process in real time. Since the LTR may be used to evaluate the anti-rollover performance of the vehicle from different aspects, the parameter LTR is adopted as the rollover stability evaluation index in the embodiments of the present invention.

After determining the rollover stability evaluation index, it is needed to determine a factor that affects the rollover stability evaluation index as a target of stability control for the vehicle. Taking LTR as an example, a mathematical model may be established expressing what parameters have influence on the lateral load transfer rate LTR, and a physical model is shown in Figure 2. Based on the physical model, in construction of a data model, it is assumed that a road is flat, the roll of an axle mass is ignored, and a wheel tread of the front axle is the same as that of the rear axle, that is, $B_r = B_1$. Assuming an sprung mass $m_s$, a height of the center of mass h, a distance from the center of mass to a roll center $h_s$, the gravitational acceleration g, an equivalent roll angle $\Phi$, an equivalent roll stiffness $K_\emptyset$, and an equivalent roll damping $C_\emptyset$, by applying a moment balance equation regarding a ground reaction point on a roll inner wheel of the vehicle (which is the right wheel in Figure 2), an equation is obtained as

$$m_s a_y h + m_s g\left(\frac{B}{2} - h_s \sin\Phi\right) = F_{zl} B \quad (4)$$

and by taking moment regarding a roll outer wheel of the vehicle in a similar manner, an equation is obtained as

$$m_s g\left(\frac{B}{2} + h_s \sin\Phi\right) - m_s a_y h = F_{zr} B \quad (5)$$

Since a value of $\Phi$ is small, it is considered as $\sin\Phi = \Phi$. While calculating the LTR, the model ignores an unsprung mass, that is, takes $m_s = m$. Based on equations (1), (2), (4) and (5), the LTR is calculated as

$$LTR = \frac{2a_y h_s + 2gh\emptyset}{Bg} \quad (6)$$

It can be seen from equation (6) that the lateral load transfer rate of vehicle rollover is affected by vehicle structural parameters and travelling parameters. Therefore, a rollover state of the vehicle can be controlled by effectively controlling these parameters. Based on equation (6), following methods may be applied to reduce a value of LTR:

1) Reducing the height h of the center of mass of the vehicle, thereby reducing h$_s$;

2) Increasing the wheel tread B of the vehicle;

3) Decreasing the roll angle Φ of the vehicle; and

4) Reducing the lateral acceleration $a_y$ of the vehicle.

These four methods are research objects for rollover. Since the structural parameters of a vehicle model has been determined in vehicle design stage, the structural parameters such as the height of the center of mass and the wheel tread of the vehicle mentioned in method 1) and method 2) cannot be changed after the vehicle is produced. Therefore, any effect in anti-rollover control that these two methods can realize has been determined in the vehicle design stage, and thus a technology of controlling rollover by optimization of the structural parameters is a passive anti-rollover technology. In a case of a constant lateral acceleration, the roll angle Φ mainly depends on the suspension system of the vehicle or other factors or parameters that determine the degree of roll of the sprung mass. Therefore, impact of the suspension must be considered if requiring decrease of the equivalent roll angle. Apparently, a main reason for rollover is that $a_y$ exceeds its limit, causing the vertical load of the inner wheel in road-turning decrease to zero. The lateral acceleration $a_y$ of the vehicle is generated by a lateral force, and the lateral force is usually controlled by an active control technology, such as active steering, differential braking, and the like. Therefore, the lateral acceleration of the vehicle when turning is often controlled using one or more of the above control technologies.

Therefore, in order to reduce a value of LTR, it is necessary to consider the impact of the suspension and choose an active control technology for controlling the lateral force. Since the type of the suspension is basically determined when the vehicle is designed, the method 3) is not considered in the embodiment of the present invention. In this way, the embodiment of the present invention focuses on reducing the lateral acceleration of the vehicle turning to solve the problem of anti-rollover.

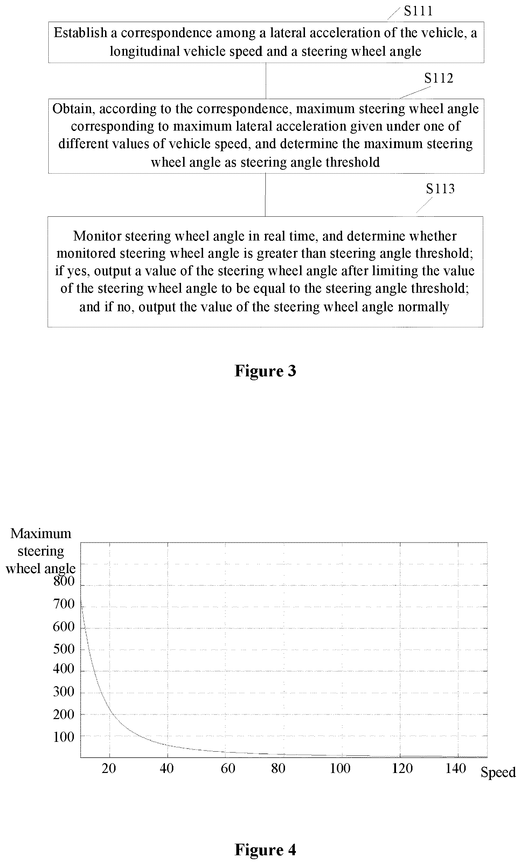

Accordingly, after selecting the lateral acceleration as the target of stability control for the vehicle, step S110 may further include steps S111 to S113 as shown in Figure 3.

In step S111, a correspondence among a lateral acceleration of the vehicle, a longitudinal vehicle speed and a steering wheel angle is established.

In a first preferred embodiment, the correspondence is established, based on a vehicle kinematics model and vehicle parameters, as:

$$\delta_{sw} = \arctan\left(\frac{La_y}{u^2}\right) \cdot i \quad (7)$$

where $\delta_{sw}$ represents the steering wheel angle, $L$ represents a wheelbase of the vehicle, $a_y$ represents the lateral acceleration, $u$ represents the longitudinal vehicle speed, and $i$ represents a steering system transmission ratio.

Specifically, as known from the kinematics principle, the lateral acceleration of the vehicle when turning is calculated as

$$a_y = \frac{u^2}{R} \quad (8)$$

where $a_y$ represents the lateral acceleration of the vehicle, $u$ represents the longitudinal vehicle speed, and $R$ represents a turning radius of the vehicle.

Further based on Ackerman's turning theory, it is known that

$$\tan\delta = \frac{L}{R} \quad (9)$$

where δ represents a front wheel deflection angle, and Z represents the wheelbase of the vehicle.

It is known that the front wheel deflection angle and the steering wheel angle satisfy

$$\delta_{sw} = \delta i \quad (10)$$

where $\delta_{sw}$ represents the steering wheel angle, $\delta$ represents the front wheel deflection angle, and $i$ represents the steering system transmission ratio.

Based on equations (8), (9) and (10), the correspondence among the lateral acceleration, the longitudinal vehicle speed and the steering wheel angle may be easily established as equation (7).

In a second not claimed embodiment, a correspondence among the lateral acceleration, the longitudinal vehicle speed, a front wheel angle and the vehicle parameters is established, based on a vehicle dynamics model and the vehicle parameters, as:

$$a_y = \left( \frac{u^2(a+b)k_1 k_2}{(a+b)^2 k_1 k_2 - mu^2(ak_1 - bk_2)} \right) \delta \quad (11)$$

where $a_y$ represents the lateral acceleration, $k_1$ represents an equivalent cornering stiffness of a front axle, $k_2$ represents an equivalent cornering stiffness of a rear axle, $a$ represents a distance from a center of mass to the front axle, $b$ represents a distance from the center of mass to the rear axle, $u$ represents the longitudinal vehicle speed, and $\delta$ represents the front wheel angle.

Equation (11) may be obtained through the following process.

First, the vehicle is simplified to a linear two-degree-of-freedom "bicycle model" for research to effectively understand a basic characteristic of vehicle motion. The two-degree-of-freedom model is expressed as:

$$\begin{bmatrix} \dfrac{k_1 + k_2}{mu} & \dfrac{ak_1 - bk_2}{mu} - u \\ \dfrac{ak_1 - bk_1}{I_z u} & \dfrac{a^2 k_1 + b^2 k_2}{I_z u} \end{bmatrix} \begin{bmatrix} v \\ w_r \end{bmatrix} - \begin{bmatrix} \dfrac{k_1}{m} \\ \dfrac{ak_1}{I_z} \end{bmatrix} \delta = \begin{bmatrix} \dot{v} \\ \dot{w}_r \end{bmatrix} \quad (12)$$

$$a_y = \dot{v} + w_r u \quad (13)$$

where $k_1$ represents the equivalent cornering stiffness of the front axle, $k_2$ represents the equivalent cornering stiffness of the rear axle, $a$ represents the distance from the center of mass to the front axle, $b$ represents the distance from the center of mass to the rear axle, $m$ represents a mass of the vehicle, $I_z$ represents a moment of inertia, $u$ represents the longitudinal vehicle speed, $v$ represents the lateral vehicle speed, $w_r$ represents a yaw velocity, and $\delta$ represents the front wheel angle.

It should be noted that the lateral vehicle speed $v$ is generally small, and has small influence on the steering wheel angle in the embodiment of the present invention. Therefore, the longitudinal vehicle speed may be simply used in some situations.

Secondly, based on an optimal preview theory, assuming that the vehicle always travels steadily along a certain curve on the road with a following error of zero, and the vehicle is currently in a steady state, satisfying $\dot{v} = \dot{\omega}_r = 0$, then based on equation (12), $w_r$ may be expressed as:

$$w_r = \left( \frac{u(a+b)k_1 k_2}{(a+b)^2 k_1 k_2 - mu^2(ak_1 - bk_2)} \right) \delta \quad (14)$$

The correspondence among the lateral acceleration, the longitudinal vehicle speed, the front wheel angle and the vehicle parameters may be obtained as equation (11) based on equations (12) to (14).

Hereinafter, description is mainly made based on the first preferred embodiment in which the relationship among the lateral acceleration, the longitudinal vehicle speed and the steering wheel angle is established based on the vehicle kinematics model.

In step S112, a maximum steering wheel angle corresponding to a maximum value of the lateral acceleration given at one of different values of vehicle speed is obtained based on the correspondence, and the maximum steering wheel angle is determined as a steering angle threshold.

Corresponding to the first preferred embodiment in step S111, based on equation (7), after assigning a maximum vehicle lateral acceleration $a_{ymax}$ under one of different values of the vehicle speed, the maximum steering wheel angle $\delta_{swmax}$ is calculated as:

$$\delta_{swmax} = \arctan\left(\frac{La_{ymax}}{u^2}\right) \cdot i \quad (15)$$

The maximum steering wheel angle $\delta_{swmax}$ is taken as the steering angle threshold.

In addition, the maximum lateral acceleration corresponding to any one of different values of the vehicle speed needs to be controlled less than the above-mentioned limit value of the lateral acceleration (preferably 0.25g).

Corresponding to the second not claimed embodiment in step S111, based on equation (11), after assigning the maximum vehicle lateral acceleration $a_{ymax}$ under one of different values of the vehicle speed, the maximum steering wheel angle $\delta_{swmax}$ is calculated as

$$\delta_{swmax} = a_{ymax}\left(\frac{(a+b)^2 k_1 k_2 - mu^2(ak_1 - bk_2)}{u^2(a+b)k_1 k_2}\right) i \quad (16)$$

In Step S 113, the steering wheel angle is monitored in real time, and it is determined whether the monitored steering wheel angle is greater than the steering angle threshold. If the monitored steering wheel angle is greater than the steering angle threshold, the steering wheel angle is limited to be equal to the steering angle threshold and then is output for lateral control of the vehicle. If the monitored steering wheel angle is less than or equal to the steering angle threshold, the steering wheel angle is output normally for lateral control of the vehicle.

Specifically, the autonomous driving system may use Electric Power Steering (EPS) for lateral control. When a target steering wheel angle is obtained by the environment perception module, the data merge module or the decision and planning module, the target steering wheel angle is limited using the steering angle threshold $\delta_{swmax}$ before being output to the EPS. At a certain moment, if the calculated target steering wheel angle is greater than the steering angle threshold, the calculated target steering wheel angle is limited as being equal to the steering angle threshold $\delta_{swmax}$, and if the calculated target steering wheel angle is less than or equal to the steering angle threshold $\delta_{swmax}$, the calculated target steering wheel angle is output normally.

For step S 110 of the safety monitoring for lateral control, practical measurement results of the safety monitoring method for the lateral control according to the embodiment of the present invention are illustrated by way of example. In the example, parameters are set according to a certain vehicle model, and a curve showing values of the maximum steering wheel angle at different values of the vehicle speed is shown in Figure 4. It can be seen that the maximum steering wheel angle decreases as the vehicle speed increases, so that rollover due to excessive vehicle speed may be avoided. The practical measurement results shown in Figure 4 indicates that the step S 110 of safety monitoring for lateral control according to the embodiment of the present disclosure can achieve a purpose of safety monitoring, especially in high-speed operating conditions, so as to ensure a safe travelling of the vehicle, and thereby improve safety of the autonomous driving system. Compared with the conventional scheme in which an extreme limit value is assigned directly, the method according to the present invention is more adaptable to different operating conditions and changing vehicle conditions.

In step S120, a step of safety monitoring for longitudinal control is performed.

In the embodiment of the present invention, before the safety monitoring for longitudinal control, a longitudinal control state of the vehicle, a corresponding longitudinal control algorithm, and a target acceleration calculated through the longitudinal control algorithm should be obtained. A specific process is described as follows.

First, the longitudinal control state of the autonomous vehicle is acquired. As mentioned above, the longitudinal control state may include three modes, i.e., cruise mode, follow-up mode and AEB mode. The three modes are determined by the decision and planning module in the autonomous driving system, and the decision and planning module transmits the current longitudinal control state of the vehicle to the motion control module for longitudinal control. Therefore, according to the embodiment of the present invention, the longitudinal control state of the autonomous vehicle may be acquired directly from the decision and planning module or the motion control module.

Then, the longitudinal control algorithm, which is different for different longitudinal control states, is acquired, and the target acceleration calculated through the longitudinal control algorithm is obtained.

After obtaining a longitudinal decision made by the decision and planning module, the motion control module applies a corresponding longitudinal control algorithm to perform the longitudinal control. For the cruise mode, the follow-up mode and the AEB mode, a purpose of the longitudinal control algorithm is to calculate an appropriate target acceleration to ensure a stable operation of the vehicle. Therefore, according to the embodiment of the present invention, information of the longitudinal control algorithm may be acquired from the motion control module of the autonomous driving system, and the target acceleration calculated through the longitudinal control algorithm may be obtained in real time.

In a preferred embodiment, the longitudinal control algorithm for the cruise mode is a P-control algorithm. Based on the P-control algorithm, the target acceleration *a* is calculated by the following equation:

$$a= (TopSpd - VehSpd) *Kp$$

where *TopSpd* represents a target vehicle speed, *VehSpd* represents a current vehicle speed, and *Kp* represents a proportional parameter for the P-control. The P-control refers to the proportion control in classic Proportion Integration Differentiation (PID) control.

Using the P-control, the acceleration may be adjusted well if a current value is not much different from a target value. However, if a difference between the two values is large, the acceleration output through the P-control exceeds a control range that the vehicle should respond to. Therefore, a longitudinal monitoring strategy is introduced in the embodiment of the present invention.

Different values of the proportional parameter Kp have different control effects. If different values of the proportional coefficient Kp are used at different values of the speed, calibrating these values of the proportional coefficient Kp is a huge project and lacks unified standard for determining the values. In addition, if a parameter or condition of the system is changed in late-stage development, the proportional coefficient Kp has to be re-calibrated, which consume a lot of manpower and material resources. Therefore, according to the embodiment of the present invention, cruise control of the vehicle is realized by adopting a method with a fixed proportional coefficient and additionally using a cruise mode monitoring strategy for correction.

In another preferred embodiment, the longitudinal control algorithm for the follow-up mode is intended to control a speed change of the autonomous vehicle under different operating conditions of the follow-up mode. A relationship between the algorithms and the operating conditions is described specifically as follows:

1) a first operating condition where a vehicle ahead travels at a speed less than a speed of the vehicle and an actual distance between the vehicle ahead and the vehicle is less than an expected distance, and a first algorithm for controlling the vehicle to decelerate at a first acceleration under the first operating condition;

2) a second operating condition where a vehicle ahead travels at a speed less than a speed of the vehicle and an actual distance between the vehicle ahead and the vehicle is greater than an expected distance, and a second algorithm for controlling the vehicle to decelerate at a second acceleration under the second operating condition;

3) a third operating condition where a vehicle ahead travels at a speed greater than a speed of the vehicle and an actual distance between the vehicle ahead and the vehicle is greater than an expected distance, and a third algorithm for controlling the vehicle to accelerate at a third acceleration under the third operating condition;

4) a fourth operating condition where a vehicle ahead travels at a speed greater than a speed of the vehicle and an actual distance between the vehicle ahead and the vehicle is less than an expected distance, and a fourth algorithm for controlling the vehicle to decelerate at a fourth acceleration under the fourth operating condition; and

5) a fifth operating condition where a difference between a speed of a vehicle ahead and a speed of the vehicle is within a set threshold range for speed and an actual distance between the vehicle ahead and the vehicle is within a set threshold range for distance, and a fifth algorithm for controlling the vehicle to follow the vehicle ahead steadily under the fifth operating condition.

Methods for calculating corresponding target acceleration under the five operating conditions are described specifically as follows.

1. Regarding the first operating condition and the first algorithm

Those skilled in the art should understand that the expression "acceleration" is not limited to indicating a scene where a vehicle accelerates, but may also indicate a scene where the vehicle decelerates. The expressions "to decelerate at an acceleration" and "deceleration" may both indicate the scene where the vehicle decelerates.

Before describing the first algorithm, concepts of safety distance (noted as *SfDis_m*) and braking distance (noted as *AEBDis_m*) are introduced. The safety distance *SfDis m* refers to a minimum distance required to maintain between the vehicle and the vehicle ahead when the two vehicles travel at a same speed. The braking distance *AEBDis_m* refers to a threshold of a distance between the two vehicles when the autonomous vehicle switches from the follow-up mode to the AEB mode.

In the embodiment of the present invention, the braking distance *AEBDis_m* is calculated by calculating *TTC* (Time to collision), and *TTC* is calculated as:

$$TTC = \begin{cases} \frac{RelaDis_m * 3.6}{VehSpd\_kph - FroVehSpd\_kph}, & VehSpd_{kph} > FroVehSpd\_kph \\ 1000, & VehSpd_{kph} \leq FroVehSpd\_kph \end{cases} \quad (1)$$

where *VehSpd_kph* represents the speed of the vehicle, *FroVehSpd_kph* represents the speed of the vehicle ahead, and *RelaDis_m* is the actual distance between the two vehicles.

The braking distance *AEBDis_m* is calculated by the following equation:

$$AEBDis\_m = (VehSpd\_kph - FroVehSpd\_kph) * TTC / 3.6 \quad (2)$$

The safety distance *SfDis_m* is calculated by the following equation:

$$SfDis_m = 0.8509 * FroVehSpd\_kph + c \quad (3)$$

where c represents a standard amount, for example, *c*=8.

Based on equations (1) to (3), the first acceleration *a1* according to the embodiment of the present invention is calculated as:

$$a1 = \begin{cases} -\frac{(VehSpd_{kph} - FroVehSpd_{kph})^2}{3.6*3.6*2*(RelaDis_m - SfDis_m)} * \frac{VehSpd_{kph}}{FroVehSpd_{kph}} * \frac{ExpDis_m}{RelaDis_m} & SfDis\_m < RelaDis\_m < ExpDis\_m \\ -\frac{(VehSpd\_kph - FroVehSpd\_kph)^2}{3.6*3.6*2*(RelaDis\_m - AEBDis\_m)} * \frac{VehSpd\_kph}{FroVehSpd\_kph} * \frac{ExpDis\_m}{RelaDis\_m} & AEBDis\_m < RelaDis\_m < SfDis\_m \\ -8 & RelaDis_m < AEBDis\_m \end{cases}$$

$$(4)$$

where *ExpDis_m* represents the expected distance.

According to equation (4), the first acceleration *a1* may be calculated in three cases, and a range of the first acceleration *a1* is determined as *a1* $\in$ [-8, 1]. In equation (4):

if the distance between the two vehicles satisfies

$$SfDis\_m < RelaDis\_m < ExpDis\_m,$$

then *a1* is calculated as

$$a1 = -\frac{(VehSpd\_kph - FroVehSpd\_kph)^2}{3.6*3.6*2*(RelaDis\_m - SfDis\_m)} \frac{VehSpd\_kph}{FroVehSpd\_kph} \frac{ExpDis\_m}{RelaDis\_m};$$

if the distance between the two vehicles satisfies

$$AEBDis\_m < RelaDis\_m < SfDis\_m,$$

Then *a1* is calculated as

$$a1 = -\frac{(VehSpd\_kph - FroVehSpd\_kph)^2}{3.6*3.6*2*(RelaDis\_m - AEBDis\_m)} \frac{VehSpd\_kph}{FroVehSpd\_kph} \frac{ExpDis\_m}{RelaDis\_m};$$

and

if the distance between the two vehicles satisfies *RelaDis_m<AEBDis_m*, the vehicle is switched from the follow-up mode to the AEB mode to perform an AEB control and the acceleration is -8m/s².

It should be noted that, in the calculation formulas of the embodiment of the present invention, a negative sign "-" of a value of the acceleration indicates "to decelerate at the acceleration" or "a deceleration".

2. Regarding the second operating condition and the second algorithm

Preferably, the second acceleration *a2* is calculated as:

$$a2 = -\frac{(VehSpd\_kph - FroVehSpd\_kph)^2}{3.6*3.6*2*(RelaDis\_m - ExpDis\_m)} * K_1 \quad (5)$$

where $K_1$ represents a constant to compensate for delay effect caused by the control algorithm. Specifically, a delayed response may occur when a vehicle longitudinal control (VLC) system of the autonomous vehicle performs longitudinal control of the vehicle, and $K_1$ is introduced to compensate for the delayed response of the VLC system.

3. Regarding the third operating condition and the third algorithm

Preferably, the third acceleration *a3* is calculated as:

$$a3 = \begin{cases} k31, & C31 \\ k32, & C32 \\ k33, & C33 \\ k34, & C34 \end{cases}$$

where *C31, C32, C33* and *C34* represent different accelerating states, and *k31, k32, k33* and *k34* represent values of the acceleration corresponding to the different acceleration states, respectively. Specifically, based on the speed of the vehicle ahead, the distance between the vehicle ahead and the vehicle, and the like, the acceleration state under the third operating condition is divided into four sub-states including *C31, C32, C33* and *C34,* and each of the sub-states corresponds to a value of the acceleration, namely *k31, k32, k33* or *k34.*

4. Regarding the fourth operating condition and the fourth algorithm

Preferably, the fourth acceleration *a4* is calculated as:

$$a4 = \begin{cases} k41, & C41 \\ k42, & C42 \\ k43, & C43 \\ k44, & C44 \end{cases}$$

where *C41, C42, C43* and *C44* represent different deceleration states, and *k41, k42, k43* and *k44* represent values of the acceleration corresponding to the different deceleration states, respectively.

5. Regarding the fifth operating condition and the fifth algorithm

In the fifth operating condition, a difference between the speed of the vehicle ahead and the speed of the vehicle is within a set threshold range for speed, and an actual distance between the vehicle ahead and the vehicle is within a set threshold range for distance. The fifth operating condition indicates that the vehicle travels following the vehicle ahead steadily at an approximately uniform speed.

The fifth algorithm is used to control the vehicle to follow the vehicle ahead steadily under the fifth operating condition.

In another embodiment, in a case where it is not strictly required that the vehicle has to follow the vehicle ahead steadily, the fifth algorithm may consider controlling the vehicle to follow the vehicle ahead steadily at the fifth acceleration *a5*. The fifth acceleration *a5* may be calculated as:

$$a5 = (FroVehSpd\_kph - VehSpd\mathrm{h}) * k_p$$

where *VehSpd_kph* represents the speed of the vehicle, *FroVehSpd_kph* represents the speed of the vehicle ahead, and $k_p$ represents a proportional coefficient.

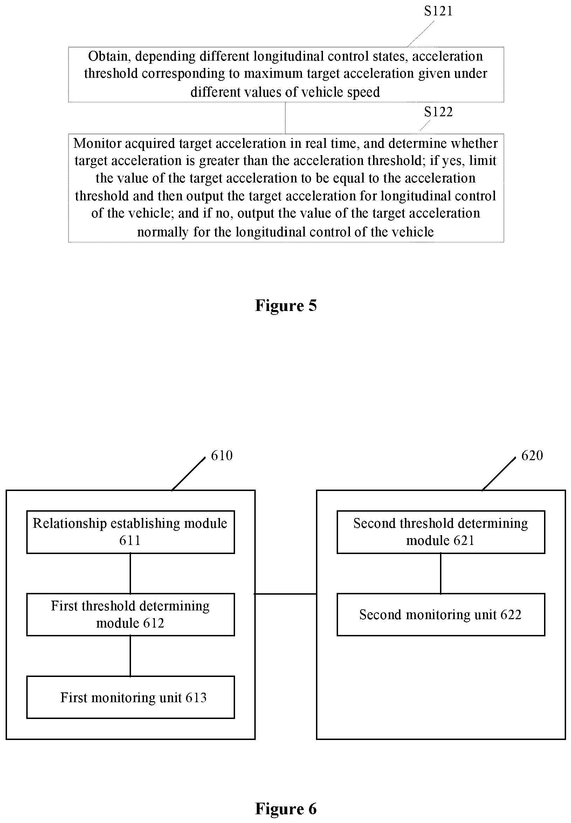

Based on the above description, the step S 120 of the safety monitoring for longitudinal control according to the embodiment of the present invention is shown in Figure 5, including step S121 to S122 as follows.

In step S121, an acceleration threshold corresponding to a maximum value of a target acceleration given under one of different values of the vehicle speed is obtained for different longitudinal control states.

Preferably, the acceleration threshold is determined by the following equation:

$$a = \begin{cases} a_{11}, & VehSpd < TopSpd * b1 \\ a_{12}, & TopSpd * b1 < VehSpd \leq b2 * TopSpd \\ a_{13}, & TopSpd * b2 < VehSpd \leq b3 * TopSpd \\ a_{14}, & TopSpd * b3 < VehSpd \leq b4 * TopSpd \\ a_{15}, & TopSpd * b4 < VehSpd \leq b5 * TopSpd \\ a_{16}, & TopSpd * b5 < VehSpd \leq b6 * TopSpd \\ a_{17}, & TopSpd * b6 < VehSpd \end{cases}$$

where *b1* to *b7* are constants that increase sequentially and are less than 1, and $a_{11}$ to $a_{17}$ are set values that decrease sequentially. In an example, *b1* to *b6* form an incremental arithmetic sequence, and *a1* to *a7* form a decreasing arithmetic sequence. For example, *b1* to *b7* are 0.35, 0.45, 0.55, 0.65, 0.75, 0.85, respectively, and $a_{11}$ to $a_{17}$ are set values in a decreasing sequence.

It should be noted that the acceleration threshold for the AEB mode is determined in a similar way as above, and is not described in detail herein.

Here, the relationship between a current vehicle speed and a target vehicle speed can be effectively controlled, and the acceleration threshold can be set in combination with a driving style and behavior of a mature driver under such operating condition. Therefore, a performance of longitudinal control is improved while ensuring the safety monitoring of longitudinal control.

In step S122, the acquired target acceleration is monitored in real time, and it is determined whether the target acceleration is greater than the acceleration threshold. If the target acceleration is greater than the acceleration threshold, the target acceleration is limited as being equal to the acceleration threshold and then is output for longitudinal control of the vehicle. If the target acceleration is less than or equal to the acceleration threshold, the target acceleration is output normally for longitudinal control of the vehicle.

In other words, the acceleration obtained through the longitudinal control algorithm is compared with a corresponding value of the acceleration threshold under one of different values of the vehicle speed, and the smaller one is transmitted to a vehicle actuating mechanism for the longitudinal control. The vehicle actuating mechanism is, for example, an Electronic Stability Program (hereinafter referred to as ESP), an Engine Control Module (hereinafter referred to as ECM) and the like.

Specifically, the motion control module executes the longitudinal control algorithm and then transmits instructions to the ESP or ECM to control the ESP or ECM to perform body stability control or engine control. However, in the embodiment of the present invention, a longitudinal monitoring module configured to performing the safety monitoring method for longitudinal control is provided between the motion control module and the ESP or ECM. The longitudinal monitoring module limits any excessive acceleration (that is, the acceleration exceeding the acceleration threshold) generated under various operating conditions to be equal to the acceleration threshold, so that the target acceleration finally output to the ESP or ECM can satisfy the limiting ability of the ESP and ECM to respond to the control.

It should be noted that in a deceleration situation, it may adaptively understood that any excessive deceleration (that is, the deceleration exceeding the deceleration threshold) generated under various operating conditions is limited to be equal to the deceleration threshold, so as to ensure normal operation of the vehicle actuating mechanism such as the ESP or ECM.

Therefore, in the step S 120 of the safety monitoring for longitudinal control according to the embodiment of the present invention, the acceleration to be output by the motion control module is monitored and limited, which, on the one hand, can prevent the vehicle from accelerating suddenly, and on the other hand, can ensure that the vehicle actuating mechanism responds normally within its limiting capacity.

In summary, according to the embodiments of the present invention, a safety monitoring strategy for an autonomous driving system is designed in view of safety of lateral control and longitudinal control of the autonomous driving system, so that the design of the autonomous driving system is more complete. In addition, the safety monitoring strategy for lateral control according to the embodiment of the present invention is more reasonable than the conventional "across-the-board" method in which a limit value is directly applied; and the safety monitoring strategy for longitudinal control takes into account a longitudinal control state of the vehicle in real time, which avoids the hidden risk of re-calibrating coefficients of the longitudinal control algorithm due to changes in parameters or conditions, so that the algorithm is more convenient and quicker, and easier for later development and maintenance. The safety strategy illustrated through the safety monitoring method or system for an autonomous driving vehicle according to the embodiments of the present invention has been tested and validated hundreds of times on a real vehicle, showing that the safety strategy can effectively guarantee the safety of the autonomous driving system.

Figure 6 is a schematic structural diagram of a safety monitoring system for an autonomous driving vehicle according to an embodiment of the present invention. As shown in Figure 6, the safety monitoring system may include a lateral control safety monitoring unit 610 and a longitudinal control safety monitoring unit 620.

The lateral control safety monitoring unit 610 further includes a relationship establishing module 611, a first threshold determining module 612 and a first monitoring module 613. The relationship establishing module 611 is configured to establish a correspondence among a lateral acceleration of the vehicle, a longitudinal vehicle speed and a steering wheel angle. The first threshold determining module 612 is configured to obtain, based on the correspondence, a maximum steering wheel angle corresponding to a maximum value of the lateral acceleration given under one of different values of a vehicle speed, and determine the maximum steering wheel angle as a steering angle threshold. The first monitoring module 613 is configured to: monitor the steering wheel angle in real time, and determine whether the monitored steering wheel angle is greater than the steering angle threshold; limit the steering wheel angle to be equal to the steering angle threshold and then output the steering wheel angle for the lateral control of the vehicle, if the monitored steering wheel angle is greater than the steering angle threshold; and output the steering wheel angle normally for the lateral control of the vehicle, if the monitored steering wheel angle is less than or equal to the steering angle threshold.

The longitudinal control safety monitoring unit 620 further includes a second threshold determining module 621 and a second monitoring module 622. The second threshold determining module 621 is configured to obtain an acceleration threshold corresponding to a maximum value of a target acceleration given under one of different values of the vehicle speed depending on one of different longitudinal control states. The second monitoring module 622 is configured to: monitor an obtained target acceleration in real time, and determine whether the target acceleration is greater than the acceleration threshold; limit the target acceleration to be equal to the acceleration threshold and then output the target acceleration for the longitudinal control of the vehicle, if the target acceleration is greater than the acceleration threshold; and output the target acceleration normally for the longitudinal control of the vehicle, if the target acceleration is less than or equal to the acceleration threshold.

It is to be understood that the connection shown in Figure 6 is exemplary. The lateral control safety monitoring unit 610 and the vertical control safety monitoring unit 620 may be independent from each other, for example.

It should be noted that, reference may be made to the embodiment of the safety monitoring method for an autonomous vehicle described above for other implementation details and effects of the safety monitoring system for an autonomous vehicle in the embodiment of the present invention, which is not repeated herein.

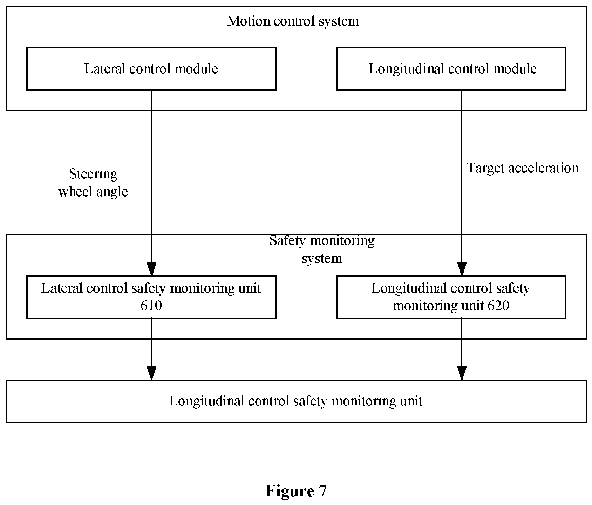

Figure 7 is a schematic structural diagram of a motion control system for an autonomous vehicle according to an embodiment of the present invention. As shown in Figure 7, the motion control system includes the safety monitoring system for an autonomous vehicle according to the above-mentioned embodiments. The motion control system is equivalent to the motion control module mention in the background section and the above description. Here, the motion control system of an autonomous vehicle according to the embodiment is integrated into the motion control module of the autonomous driving system so as to enrich functions for the lateral control and the longitudinal control of the motion control module.

Specifically, referring to Figure 7, the motion control system may include a lateral control module and a longitudinal control module. The lateral control safety monitoring unit corresponds to the lateral control module, and the longitudinal control safety monitoring unit corresponds to the longitudinal control module. The steering wheel angle output from the lateral control module and the target acceleration output from the longitudinal control module are output to the underlying vehicle actuating mechanism after safety monitoring by the lateral control safety monitoring unit and the longitudinal control safety monitoring unit correspondingly. In this way, safety of the motion control of the autonomous driving system is improved.

A machine-readable storage medium is further provided according to another embodiment of the present invention. The machine-readable storage medium has instructions stored thereon for causing a machine to perform the safety monitoring method for longitudinal control of an autonomous vehicle. The machine-readable storage medium includes, but not limited to: a random access memory (RAM) such as a phase change memory (which is a short name of a phase change random access memory (PRAM), also known as an RCM/PCRAM), a static random access memory (SRAM), a dynamic random access memory (DRAM), and the like; another memory technique such as a read-only memory (ROM), an electrically erasable programmable read-only memory (EEPROM), a flash memory, and the like; an optical storage such as a CD-ROM, a Digital Versatile Disk (DVD), and the like; a magnetic storage such as a magnetic cassette tape, a magnetic tape magnetic disk storage, and the like; and any other medium that can store program codes.

A processor for running a program is further provided according to another embodiment of the present invention. The processor is configured to execute the safety monitoring method for an autonomous vehicle according to the above embodiment when running the program.

The processor may be an Electronic Control Unit (ECU) of the vehicle, or may be a conventional independent controller, such as a CPU, a single-chip microcomputer, a Digital Signal Processor (DSP), a System on a Chip (SOC), and the like. It is understandable that the independent controller may be integrated into the ECU. The processor is preferably implemented with a controller having a faster calculation speed and various I/O port devices, including an input/output port for CAN communication with the vehicle, an input/output port for switching signals, a network cable interface, and the like.

## Claims

1. A safety monitoring method for an autonomous vehicle, comprising a step of safety monitoring for lateral control, and a step of safety monitoring for longitudinal control, wherein

the step of safety monitoring for lateral control comprises

establishing a correspondence among a lateral acceleration of the vehicle, a longitudinal vehicle speed and a steering wheel angle;
obtaining, according to the correspondence, a maximum steering wheel angle corresponding to a maximum value of the lateral acceleration given under one of different values of a vehicle speed, and determining the maximum steering wheel angle as a steering angle threshold;
monitoring the steering wheel angle in real time, and determining whether the monitored value of the steering wheel angle is greater than the steering angle threshold;
in a case where the monitored value of the steering wheel angle is greater than the steering angle threshold, limiting a value of the steering wheel angle to be equal to the steering angle threshold and then outputting the value of the steering wheel angle for the lateral control of the vehicle; and
in a case where the monitored value of the steering wheel angle is less than or equal to the steering angle threshold, outputting the value of the steering wheel angle normally for the lateral control of the vehicle; and

the step of safety monitoring for longitudinal control comprises

obtaining, depending on one of different states of the longitudinal control, an acceleration threshold corresponding to a maximum value of a target acceleration given under one of different values of the vehicle speed; and
monitoring an acquired value of the target acceleration in real time, and determining whether the value of the target acceleration is greater than the acceleration threshold;
in a case where the value of the target acceleration is greater than the acceleration threshold, limiting the value of the target acceleration to be equal to the acceleration threshold and then outputting the value of the target acceleration for the longitudinal control of the vehicle; and
in a case where the value of the target acceleration is less than or equal to the acceleration threshold, outputting the value of the target acceleration normally for the longitudinal control of the vehicle, **characterized in that**

the establishing a correspondence among a lateral acceleration of the vehicle, a longitudinal vehicle speed and a steering wheel angle comprises:
establishing, based on a vehicle kinematics model and vehicle parameters, the correspondence as

$$\delta_{sw} = \arctan\left(\frac{L a_y}{u^2}\right) \cdot i$$

where $\delta_{sw}$ represents the steering wheel angle, $L$ represents a wheelbase of the vehicle, $a_y$ represents the lateral acceleration, $u$ represents the longitudinal vehicle speed, and $i$ represents a steering system transmission ratio.

2. The safety monitoring method for an autonomous vehicle according to claim 1, wherein the obtaining, depending on one of different states of the longitudinal control, an acceleration threshold corresponding to a maximum value of a target acceleration given under one of different values of the vehicle speed comprises:
determining the acceleration threshold by the following equation

$$a = \begin{cases} a_{11}, & VehSpd < TopSpd * b1 \\ a_{12}, & TopSpd * b1 < VehSpd \le b2 * TopSpd \\ a_{13}, & TopSpd * b2 < VehSpd \le b3 * TopSpd \\ a_{14}, & TopSpd * b3 < VehSpd \le b4 * TopSpd \\ a_{15}, & TopSpd * b4 < VehSpd \le b5 * TopSpd \\ a_{16}, & TopSpd * b5 < VehSpd \le b6 * TopSpd \\ a_{17}, & TopSpd * b6 < VehSpd \end{cases}$$

where $TopSpd$ represents a target vehicle speed, $VehSpd$ represents a current vehicle speed, $b1$ to $b6$ are constants in an increasing sequence and less than 1, and $a_{11}$ to $a_{17}$ are set values in a decreasing sequence.

3. The safety monitoring method for an autonomous vehicle according to claim 1, wherein in the step of safety monitoring for lateral control, before the establishing a correspondence among a lateral acceleration of the vehicle, a longitudinal vehicle speed and a steering wheel angle, the method further comprises:

establishing a rollover stability evaluation index for the vehicle, wherein the rollover stability evaluation index comprises a lateral-load transfer rate of the vehicle; and
determining a factor that affects the rollover stability evaluation index as a target of stability control for the vehicle, comprising

determining a factor that affects the lateral-load transfer rate, wherein the factor comprises the lateral acceleration of the vehicle; and
taking the lateral acceleration as the target of stability control for the vehicle corresponding to the lateral-load transfer rate.

4. A machine-readable storage medium having instructions stored thereon which, when executed by a computer, cause the computer to perform the safety monitoring method for an autonomous vehicle according to any one of claims 1 to 3.

5. A safety monitoring system for an autonomous vehicle, comprising:

a lateral control safety monitoring unit (610) comprising:

a relationship establishing module (611) configured to establish a correspondence among a lateral acceleration of the vehicle, a longitudinal vehicle speed and a steering wheel angle;
a first threshold determining module (612) configured to obtain, based on the correspondence, a maximum steering wheel angle corresponding to a maximum value of the lateral acceleration given under one of different values of a vehicle speed, and determine the maximum steering wheel angle as a steering angle threshold; and
a first monitoring module configured to monitor the value of the steering wheel angle in real time; determine whether the monitored value of the steering wheel angle is greater than the steering angle threshold; in a case where the monitored value of the steering wheel angle is greater than the steering angle threshold, limit the value of the steering wheel angle to be equal to the steering angle threshold and then output the value of the steering wheel angle for a lateral control of the vehicle; and in a case where the monitored value of the steering wheel angle is less than or equal to the steering angle threshold, output the value of the steering wheel angle normally for the lateral control of the vehicle; and

a longitudinal control safety monitoring unit (620) comprising:

a second threshold determining module (621) configured to obtain, depending on one of different states of the longitudinal control, an acceleration threshold corresponding to a maximum value of a target acceleration given under one of different values of the vehicle speed; and
a second monitoring module (622) configured to monitor an acquired value of the target acceleration in real time, and determine whether the value of the target acceleration is greater than the acceleration threshold; in a case where the value of the target acceleration is greater than the acceleration threshold, limit the value of the target acceleration to be equal to the acceleration threshold and then output the value of the target acceleration for a longitudinal control of the vehicle; and in a case where the value of the target acceleration is less than or equal to the acceleration threshold, output the value of the target acceleration normally for the longitudinal control of the vehicle, **characterized in that**
the relationship establishing module (611) is configured to establish the correspondence among the lateral acceleration of the vehicle, the longitudinal vehicle speed and the steering wheel angle in the following manner:
establishing, based on a vehicle kinematics model and vehicle parameters, the correspondence as

$$\delta_{sw} = \arctan\left(\frac{L a_y}{u^2}\right) \cdot i$$

where $\delta_{sw}$ represents the steering wheel angle, $L$ represents a wheelbase of the vehicle, $a_y$ represents the lateral acceleration, $u$ represents the longitudinal vehicle speed, and $i$ represents a steering system transmission ratio.

6. The safety monitoring system for an autonomous vehicle according to claim 5 wherein
the second threshold determining module (621) is configured to obtain, depending on one of different states of the longitudinal control, the acceleration threshold corresponding to the maximum value of the target acceleration given under one of different values of the vehicle speed in the following manner:
determining the acceleration threshold by the following equation

$$a = \begin{cases} a_{11}, & VehSpd < TopSpd * b1 \\ a_{12}, & TopSpd * b1 < VehSpd \leq b2 * TopSpd \\ a_{13}, & TopSpd * b2 < VehSpd \leq b3 * TopSpd \\ a_{14}, & TopSpd * b3 < VehSpd \leq b4 * TopSpd \\ a_{15}, & TopSpd * b4 < VehSpd \leq b5 * TopSpd \\ a_{16}, & TopSpd * b5 < VehSpd \leq b6 * TopSpd \\ a_{17}, & TopSpd * b6 < VehSpd \end{cases}$$

where *TopSpd* represents a target vehicle speed, *VehSpd* represents a current vehicle speed, *b1* to *b6* are constants in an increasing sequence and less than 1, and $a_{11}$ to $a_{17}$ are set values in a decreasing sequence.

**Patentansprüche**

1. Sicherheitsüberwachungsverfahren für ein autonomes Fahrzeug, mit einem Schritt der Sicherheitsüberwachung für die Querführung und einen Schritt der Sicherheitsüberwachung für die Längsführung, wobei

der Schritt der Sicherheitsüberwachung für die Querführung die folgenden Schritte aufweist:

Herstellen einer Korrespondenz zwischen einer Querbeschleunigung des Fahrzeugs und einer Längsgeschwindigkeit des Fahrzeugs und einem Lenkradwinkel;
Erhalten, gemäß der Korrespondenz, eines maximalen Lenkradwinkels, der einem maximalen Wert der Querbeschleunigung entspricht, der bei einem von verschiedenen Werten einer Fahrzeuggeschwindigkeit gegeben ist, und Bestimmen des maximalen Lenkradwinkelwerts als einen Lenkwinkelschwellenwert;

Überwachen des Lenkradwinkels in Echtzeit, und Feststellen, ob der überwachte Wert des Lenkradwinkels größer als der Lenkwinkelschwellenwert ist;

wenn der überwachte Wert des Lenkradwinkels größer als der Lenkwinkelschwellenwert ist, Begrenzen eines Werts des Lenkradwinkels derart, dass er gleich dem Lenkwinkelschwellenwert ist, und anschließendes Ausgeben des Werts des Lenkradwinkels für die Querführung des Fahrzeugs; und

wenn der überwachte Wert des Lenkradwinkels kleiner als oder gleich dem Lenkwinkelschwellenwert ist, normales Ausgeben des Werts des Lenkradwinkels für die Seitenführung des Fahrzeugs; und

der Schritt der Sicherheitsüberwachung für die Längsführung die folgenden Schritte aufweist:

Erhalten, in Abhängigkeit von einem von verschiedenen Zuständen der Längsführung, eines Beschleunigungsschwellenwerts, der einem maximalen Wert einer Soll-Beschleunigung entspricht, der bei einem von verschiedenen Werten der Fahrzeuggeschwindigkeit gegeben ist; und

Überwachen eines erhaltenen Werts der Soll-Beschleunigung in Echtzeit, und Feststellen, ob der Wert der Soll-Beschleunigung größer als der Beschleunigungsschwellenwert ist;

wenn der Wert der Soll-Beschleunigung größer als der Beschleunigungsschwellenwert ist, Begrenzen des Werts der Soll-Beschleunigung derart, dass er gleich dem Beschleunigungsschwellenwert ist, und anschließendes Ausgeben des Werts der Soll-Beschleunigung für die Längsführung des Fahrzeugs; und

wenn der Wert der Soll-Beschleunigung kleiner als oder gleich dem Lenkwinkelschwellenwert ist, normales Ausgeben des Werts der Soll-Beschleunigung für die Längsführung des Fahrzeugs,

**dadurch gekennzeichnet,**

**dass** das Herstellen einer Korrespondenz zwischen einer Querbeschleunigung des Fahrzeugs, einer Längsgeschwindigkeit des Fahrzeugs und einem Lenkradwinkel den folgenden Schritt aufweist:

basierend auf einem Fahrzeugkinematikmodell und Fahrzeugparametern, Herstellen der Korrespondenz als

$$\delta_{sw} = \arctan\left(\frac{L a_y}{u^2}\right) \cdot i$$

wobei $\delta_{sw}$ den Lenkradwinkel angibt, $L$ den Radstand des Fahrzeugs angibt, $a_y$ die Querbeschleunigung angibt, $n$ die Längsgeschwindigkeit des Fahrzeugs angibt, und $i$ ein Lenksystemübersetzungsverhältnis angibt.

2. Sicherheitsüberwachungsverfahren für ein autonomes Fahrzeug nach Anspruch 1, bei welchem das Erhalten, in Abhängigkeit von einem von verschiedenen Zuständen der Längsführung, eines Beschleunigungsschwellenwerts, der einem maximalen Wert einer Soll-Beschleunigung entspricht, der bei einem von verschiedenen Werten der Fahrzeuggeschwindigkeit gegeben ist, den folgenden Schritt aufweist:

Bestimmen des Beschleunigungsschwellenwerts durch die folgende Gleichung:

$$a = \begin{cases} a_{11}, & VehSpd < TopSpd * b1 \\ a_{12}, & TopSpd * b1 < VehSpd \leq b2 * TopSpd \\ a_{13}, & TopSpd * b2 < VehSpd \leq b3 * TopSpd \\ a_{14}, & TopSpd * b3 < VehSpd \leq b4 * TopSpd \\ a_{15}, & TopSpd * b4 < VehSpd \leq b5 * TopSpd \\ a_{16}, & TopSpd * b5 < VehSpd \leq b6 * TopSpd \\ a_{17}, & TopSpd * b6 < VehSpd \end{cases}$$

wobei *TopSpd* eine Soll-Fahrzeuggeschwindigkeit angibt, *VehSpd* eine aktuelle Fahrzeuggeschwindigkeit angibt, *b1* bis *b6* Konstanten in ansteigender Reihenfolge und kleiner 1 sind, $a_{11}$ bis $a_{17}$ vorgegebene Werte in abnehmender Reihenfolge sind.

3. Sicherheitsüberwachungsverfahren für ein autonomes Fahrzeug nach Anspruch 1, bei welchem der Schritt der Sicherheitsüberwachung für die Querführung vor dem Herstellen einer Korrespondenz zwischen einer Querbeschleunigung des Fahrzeugs, einer Längsgeschwindigkeit des Fahrzeugs und einem Lenkradwinkel die folgenden Schritte aufweist:

Erstellen eines Bewertungsindex für die Überrollstabilität des Fahrzeugs, wobei der Bewertungsindex für die Überrollstabilität eine Querlastübertragungsrate des Fahrzeugs aufweist; und
Bestimmen eines Faktors, der sich auf den Bewertungsindex für die Überrollstabilität auswirkt, als einen Zielwert der Stabilitätssteuerung des Fahrzeugs, mit den Schritten:

Bestimmen eines Faktors, der sich auf die Querlastübertragungsrate auswirkt, wobei der Faktor die Querbeschleunigung des Fahrzeugs aufweist; und
Verwenden der Querbeschleunigung als den Zielwert der Stabilitätssteuerung des Fahrzeugs entsprechend der Querlastübertragungsrate.

4. Maschinenlesbares Speichermedium mit darauf gespeicherten Befehlen, die bei Ausführung durch einen Computer den Computer veranlassen, das Sicherheitsüberwachungsverfahren für ein autonomes Fahrzeug nach einem der Ansprüche 1 bis 3 durchzuführen.

5. Sicherheitsüberwachungssystem für ein autonomes Fahrzeug, mit:

einer Querführungssicherheitsüberwachungseinheit (610) mit:

einem Beziehungsherstellungsmodul (611), das dazu ausgebildet ist, eine Korrespondenz zwischen einer Querbeschleunigung des Fahrzeugs und einer Längsgeschwindigkeit des Fahrzeugs und einem Lenkradwinkel herzustellen;
einem ersten Schwellenwertbestimmungsmodul (612), das dazu ausgebildet ist, gemäß der Korrespondenz einen maximalen Lenkradwinkel zu erhalten, der einem maximalen Wert der Querbeschleunigung entspricht, der bei einem von verschiedenen Werten einer Fahrzeuggeschwindigkeit gegeben ist, und den maximalen Lenkradwinkelwert als einen Lenkwinkelschwellenwert zu bestimmen; und
einem ersten Überwachungsmodul, das dazu ausgebildet ist, den Wert des Lenkradwinkels in Echtzeit zu überwachen, und festzustellen, ob der überwachte Wert des Lenkradwinkels größer als der Lenkwinkelschwellenwert ist; wenn der überwachte Wert des Lenkradwinkels größer als der Lenkwinkelschwellenwert ist, des Werts des Lenkradwinkels derart zu begrenzen, dass er gleich dem Lenkwinkelschwellenwert ist, und anschließend den Wert des Lenkradwinkels für die Querführung des Fahrzeugs auszugeben; und wenn der überwachte Wert des Lenkradwinkels kleiner als oder gleich dem Lenkwinkelschwellenwert ist, den Wert des Lenkradwinkels für die Seitenführung des Fahrzeugs normal auszugeben; und

einer Längsführungssicherheitsüberwachungseinheit (620) mit:

einem zweiten Schwellenwertbestimmungsmodul (621), das dazu ausgebildet ist, in Abhängigkeit von einem von verschiedenen Zuständen der Längsführung, einen Beschleunigungsschwellenwert zu erhalten, der einem maximalen Wert einer Soll-Beschleunigung entspricht, der bei einem von verschiedenen Werten der Fahrzeuggeschwindigkeit gegeben ist; und
einem zweiten Überwachungsmodul (622), das dazu ausgebildet ist, einen erhaltenen Wert der Soll-Beschleunigung in Echtzeit zu überwachen, und festzustellen, ob der Wert der Soll-Beschleunigung größer als der Beschleunigungsschwellenwert ist; wenn der Wert der Soll-Beschleunigung größer als der Beschleunigungsschwellenwert ist, den Wert der Soll-Beschleunigung derart zu begrenzen, dass er gleich dem Beschleunigungsschwellenwert ist, und anschließend den Wert der Soll-Beschleunigung für die Längsführung des Fahrzeugs auszugeben; und wenn der Wert der Soll-Beschleunigung kleiner als oder gleich dem Lenkwinkelschwellenwert ist, den Wert der Soll-Beschleunigung für die Längsführung des Fahrzeugs normal auszugeben,

**dadurch gekennzeichnet,**
**dass** das Beziehungsherstellungsmodul (611), dazu ausgebildet ist, die Korrespondenz zwischen der Querbeschleunigung des Fahrzeugs und der Längsgeschwindigkeit des Fahrzeugs und dem Lenkradwinkel auf die folgende Weise herzustellen:

basierend auf einem Fahrzeugkinematikmodell und Fahrzeugparametern, Herstellen der Korrespondenz

als

$$\delta_{sw} = \arctan\left(\frac{L a_y}{u^2}\right) \cdot i$$

wobei $\delta_{sw}$ den Lenkradwinkel angibt, *L* den Radstand des Fahrzeugs angibt, $a_y$ die Querbeschleunigung angibt, *n* die Längsgeschwindigkeit des Fahrzeugs angibt, und *i* ein Lenksystemübersetzungsverhältnis angibt.

6. Sicherheitsüberwachungssystem für ein autonomes Fahrzeug nach Anspruch 5, bei welchem das zweite Schwellenwertbestimmungsmodul (621) dazu ausgebildet ist, in Abhängigkeit von einem von verschiedenen Zuständen der Längsführung, eines Beschleunigungsschwellenwerts, der einem maximalen Wert einer Soll-Beschleunigung entspricht, der bei einem von verschiedenen Werten der Fahrzeuggeschwindigkeit gegeben ist, auf die folgende Weise zu erhalten:
Bestimmen des Beschleunigungsschwellenwerts durch die folgende Gleichung:

$$a = \begin{cases} a_{11}, & VehSpd < TopSpd * b1 \\ a_{12}, & TopSpd * b1 < VehSpd \leq b2 * TopSpd \\ a_{13}, & TopSpd * b2 < VehSpd \leq b3 * TopSpd \\ a_{14}, & TopSpd * b3 < VehSpd \leq b4 * TopSpd \\ a_{15}, & TopSpd * b4 < VehSpd \leq b5 * TopSpd \\ a_{16}, & TopSpd * b5 < VehSpd \leq b6 * TopSpd \\ a_{17}, & TopSpd * b6 < VehSpd \end{cases}$$

wobei *TopSpd* eine Soll-Fahrzeuggeschwindigkeit angibt, *VehSpd* eine aktuelle Fahrzeuggeschwindigkeit angibt, *b1* bis *b6* Konstanten in ansteigender Reihenfolge und kleiner 1 sind, $a_{11}$ bis $a_{17}$ vorgegebene Werte in abnehmender Reihenfolge sind.

## Revendications

1. Procédé de surveillance de sécurité pour un véhicule autonome, comprenant une étape de surveillance de sécurité pour une commande latérale, et une étape de surveillance de sécurité pour une commande longitudinale, dans lequel

l'étape de surveillance de sécurité pour la commande latérale comprend
l'établissement d'une correspondance entre une accélération latérale du véhicule, une vitesse longitudinale de véhicule et un angle de volant ;
l'obtention, en fonction de la correspondance, d'un angle de volant maximal correspondant à une valeur maximale de l'accélération latérale donnée sous l'une des valeurs différentes d'une vitesse de véhicule, et la détermination de l'angle de volant maximal en tant que seuil d'angle de braquage ;
la surveillance de l'angle de volant en temps réel, et la détermination de savoir si la valeur surveillée de l'angle de volant est supérieure au seuil d'angle de braquage ;
dans un cas où la valeur surveillée de l'angle de volant est supérieure au seuil d'angle de direction, la limitation d'une valeur de l'angle de volant pour être égale au seuil d'angle de braquage et ensuite la sortie de la valeur de l'angle de volant pour la commande latérale du véhicule ; et
dans un cas où la valeur surveillée de l'angle de volant est inférieure ou égale au seuil d'angle de braquage, le sortie de la valeur de l'angle de volant normalement pour la commande latérale du véhicule ; et
l'étape de surveillance de sécurité pour la commande longitudinale comprend
l'obtention, en fonction de l'un des états différents de la commande longitudinale, un seuil d'accélération correspondant à une valeur maximale d'une accélération cible donnée sous l'une des valeurs différentes de la vitesse du véhicule ; et
la surveillance d'une valeur acquise de l'accélération cible en temps réel, et la détermination de savoir si la valeur de l'accélération cible est supérieure au seuil d'accélération ;
dans un cas où la valeur de l'accélération cible est supérieure au seuil d'accélération, la limitation de la valeur de l'accélération cible pour être égale au seuil d'accélération et ensuite la sortie de la valeur de l'accélération cible pour la commande longitudinale du véhicule ; et

dans un cas où la valeur de l'accélération cible est inférieure ou égale au seuil d'accélération, la sortie de la valeur de l'accélération cible normalement pour la commande longitudinale du véhicule, **caractérisé en ce que** l'établissement d'une correspondance parmi une accélération latérale du véhicule, une vitesse longitudinale du véhicule et un angle de volant comprend :

l'établissement, sur la base d'un modèle de cinématique de véhicule et des paramètres de véhicule, la correspondance comme

$$\delta_{sw} = \arctan\left(\frac{L a_y}{u^2}\right) \cdot i$$

où $\delta_{sw}$ représente l'angle de volant, $L$ représente un empattement du véhicule, $a_y$ représente l'accélération latérale, $u$ représente la vitesse longitudinale du véhicule, et $i$ représente un rapport de transmission du système de direction.

2. Procédé de surveillance de sécurité pour un véhicule autonome selon la revendication 1, dans lequel l'obtention, en fonction de l'un des états différents de la commande longitudinale, d'un seuil d'accélération correspondant à une valeur maximale d'une accélération cible donnée sous l'une des valeurs différentes de la vitesse du véhicule comprend :

la détermination du seuil d'accélération par l'équation suivante

$$a = \begin{cases} a_{11}, & VehSpd < TopSpd * b1 \\ a_{12}, & TopSpd * b1 < VehSpd \leq b2 * TopSpd \\ a_{13}, & TopSpd * b2 < VehSpd \leq b3 * TopSpd \\ a_{14}, & TopSpd * b3 < VehSpd \leq b4 * TopSpd \\ a_{15}, & TopSpd * b4 < VehSpd \leq b5 * TopSpd \\ a_{16}, & TopSpd * b5 < VehSpd \leq b6 * TopSpd \\ a_{17}, & TopSpd * b6 < VehSpd \end{cases}$$

où $TopSpd$ représente une vitesse cible de véhicule, $VehSpd$ représente une vitesse actuelle du véhicule, $b1$ à $b6$ sont des constantes dans une séquence croissante et inférieure à 1, et $a_{11}$ à $a_{17}$ sont des valeurs définies dans une séquence décroissante.

3. Procédé de surveillance de sécurité pour un véhicule autonome selon la revendication 1, dans lequel, dans l'étape de surveillance de sécurité pour une commande latérale, avant l'établissement d'une correspondance parmi une accélération latérale du véhicule, une vitesse de véhicule longitudinale et un angle de volant, le procédé comprend en outre :

l'établissement d'un indice d'évaluation de stabilité de renversement pour le véhicule, l'indice d'évaluation de stabilité au roulement comprenant un taux de transfert de charge latérale du véhicule ; et
la détermination d'un facteur qui affecte l'indice d'évaluation de stabilité de roulement en tant que cible de commander de stabilité pour le véhicule, comprenant
la détermination d'un facteur qui affecte le taux de transfert de charge latérale, dans lequel le facteur comprend l'accélération latérale du véhicule ; et
la prise de l'accélération latérale comme cible de commande de stabilité pour le véhicule correspondant au taux de transfert de charge latérale.

4. Support de stockage lisible par machine sur lequel sont stockées des instructions qui, lorsqu'elles sont exécutées par un ordinateur, amènent l'ordinateur à effectuer le procédé de surveillance de sécurité pour un véhicule autonome selon l'une quelconque des revendications 1 à 3.

5. Système de surveillance de sécurité pour un véhicule autonome, comprenant :
une unité de surveillance de sécurité de commande latérale (610) comprenant :

un module d'établissement de relation (611) configuré pour établir une correspondance entre une accélération latérale du véhicule, une vitesse longitudinale de véhicule et un angle de volant de direction ;
un premier module de détermination de seuil (612) configuré pour obtenir, sur la base de la correspondance, un angle de volant maximal correspondant à une valeur maximale de l'accélération latérale donnée sous l'une des valeurs différentes d'une vitesse de véhicule, et la détermination de l'angle de volant maximal en tant que seuil d'angle de direction ; et
un premier module de surveillance configuré pour surveiller la valeur de l'angle de volant en temps réel ; la détermination de savoir si la valeur surveillée de l'angle de volant est supérieure au seuil d'angle de braquage ; dans un cas où la valeur surveillée de l'angle de volant est supérieure au seuil d'angle de braquage, la limitation de la valeur de l'angle de volant pour être égale au seuil d'angle de braquage, puis la sortie de la valeur de l'angle de volant pour une commande latérale du véhicule ; et dans un cas où la valeur surveillée de l'angle de volant est inférieure ou égale au seuil d'angle de braquage, la sortie de la valeur de l'angle de volant normalement pour la commander latérale du véhicule ; et
une unité de surveillance de sécurité de commande longitudinale (620) comprenant :

un second module de détermination de seuil (621) configuré pour obtenir, en fonction de l'un des états différents de la commande longitudinale, un seuil d'accélération correspondant à une valeur maximale d'une accélération cible donnée sous l'une des valeurs différentes de la vitesse de véhicule ; et
un second module de surveillance (622) configuré pour surveiller une valeur acquise de l'accélération cible en temps réel, et la détermination de savoir si la valeur de l'accélération cible est supérieure au seuil d'accélération ; dans un cas où la valeur de l'accélération cible est supérieure au seuil d'accélération, la limitation de la valeur de l'accélération cible pour être égale au seuil d'accélération, puis la sortie de la valeur de l'accélération cible pour une commande longitudinale du véhicule ; et dans un cas où la valeur de l'accélération cible est inférieure ou égale au seuil d'accélération, la sortie de la valeur de l'accélération cible normalement pour la commande longitudinale du véhicule, **caractérisé en ce que**
le module d'établissement de relation (611) est configuré pour établir la correspondance entre l'accélération latérale du véhicule, la vitesse longitudinale du véhicule et l'angle de volant de la manière suivante :

l'établissement, sur la base d'un modèle de cinématique de véhicule et des paramètres de véhicule, la correspondance comme

$$\delta_{sw} = \arctan\left(\frac{La_y}{u^2}\right) \cdot i$$

où $\delta_{sw}$ représente l'angle de volant, $L$ représente un empattement du véhicule, $a_y$ représente l'accélération latérale, $u$ représente la vitesse longitudinale du véhicule, et $i$ représente un rapport de transmission du système de direction.

6. Système de surveillance de sécurité pour véhicule autonome selon la revendication 5, dans lequel le second module de détermination de seuil (621) est configuré pour obtenir, en fonction de l'un des états différents de la commande longitudinale, le seuil d'accélération correspondant à la valeur maximale de l'accélération cible donnée sous l'une des valeurs différentes de la vitesse du véhicule de la manière suivante :

la détermination du seuil d'accélération par l'équation suivante

$$a = \begin{cases} a_{11}, & VehSpd < TopSpd * b1 \\ a_{12}, & TopSpd * b1 < VehSpd \leq b2 * TopSpd \\ a_{13}, & TopSpd * b2 < VehSpd \leq b3 * TopSpd \\ a_{14}, & TopSpd * b3 < VehSpd \leq b4 * TopSpd \\ a_{15}, & TopSpd * b4 < VehSpd \leq b5 * TopSpd \\ a_{16}, & TopSpd * b5 < VehSpd \leq b6 * TopSpd \\ a_{17}, & TopSpd * b6 < VehSpd \end{cases}$$

où *TopSpd* représente une vitesse cible de véhicule, *VehSpd* représente une vitesse actuelle du véhicule, *b1* à *b6* sont des constantes dans une séquence croissante et inférieure à 1, et $a_{11}$ à $a_{17}$ sont des valeurs définies dans une séquence décroissante.

S110

| Step of safety monitoring for lateral control |
| :---: |

S120

| Step of safety monitoring for longitudinal control |
| :---: |

**Figure 1**

**Figure 2**

S111

Establish a correspondence among a lateral acceleration of the vehicle, a longitudinal vehicle speed and a steering wheel angle

S112

Obtain, according to the correspondence, maximum steering wheel angle corresponding to maximum lateral acceleration given under one of different values of vehicle speed, and determine the maximum steering wheel angle as steering angle threshold

S113

Monitor steering wheel angle in real time, and determine whether monitored steering wheel angle is greater than steering angle threshold; if yes, output a value of the steering wheel angle after limiting the value of the steering wheel angle to be equal to the steering angle threshold; and if no, output the value of the steering wheel angle normally

**Figure 3**

Maximum
steering
wheel angle

**Figure 4**

S121

Obtain, depending different longitudinal control states, acceleration threshold corresponding to maximum target acceleration given under different values of vehicle speed

S122

Monitor acquired target acceleration in real time, and determine whether target acceleration is greater than the acceleration threshold; if yes, limit the value of the target acceleration to be equal to the acceleration threshold and then output the target acceleration for longitudinal control of the vehicle; and if no, output the value of the target acceleration normally for the longitudinal control of the vehicle

**Figure 5**

610

620

Relationship establishing module 611

First threshold determining module 612

First monitoring unit 613

Second threshold determining module 621

Second monitoring unit 622

**Figure 6**

Motion control system

Lateral control module

Longitudinal control module

Steering
wheel angle

Target acceleration

Safety monitoring
system

Lateral control safety monitoring unit
610

Longitudinal control safety
monitoring unit 620 Longitudinal control safety monitoring unit

**Figure 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102016011282 A1